# EUROPEAN PATENT APPLICATION

(11) **EP 4 636 948 A1**
(43) Date of publication of application: **22.10.2025**
(21) Application number: 24744284.1
(22) Date of filing: 17.01.2024
(51) Int. Cl.: H01Q 1/22

(54) **ELECTRONIC DEVICE**

(30) Priority: 20.01.2023 CN 202310101178
(71) Applicant: Huawei Technologies Co., Ltd., Shenzhen, Guangdong 518129 (CN)
(72) Inventor: LU, Liang, Shenzhen, Guangdong 518129 (CN); LIU, Yongchao, Shenzhen, Guangdong 518129 (CN); ZHANG, Yun, Shenzhen, Guangdong 518129 (CN); ZHANG, Xiaoguo, Shenzhen, Guangdong 518129 (CN); ZHANG, Jinglei, Shenzhen, Guangdong 518129 (CN); DU, Bin, Shenzhen, Guangdong 518129 (CN); CHENG, Minggui, Shenzhen, Guangdong 518129 (CN); LI, Jie, Shenzhen, Guangdong 518129 (CN)
(74) Representative: Goddar, Heinz J.
(86) International application number: PCT/CN2024/072701
(87) International publication number: WO 2024/153109

(57) **Abstract**

This application discloses an electronic device. An NFC antenna circuit of the electronic device includes an NFC chip, a matching circuit, and a plurality of antennas. The plurality of antennas may adopt a distributed design approach. The plurality of antennas work at the same time. A circuit of each antenna may be a dual-ended circuit or a single-ended circuit. According to the solution of this application, an NFC sensing area can be expanded, so that a user can implement an NFC function without specially placing a specific part of the device close to a tag or a card reader, thereby improving user experience.

## Description

This application claims priority to Chinese Patent Application No. 202310101178.4, filed with the China National Intellectual Property Administration on January 20, 2023 and entitled "ELECTRONIC DEVICE", which is incorporated herein by reference in its entirety.

### TECHNICAL FIELD

This application relates to the field of antenna technologies, and in particular, to an electronic device.

### BACKGROUND

Many mobile terminals in the market integrate a near field communication (near field communication, NFC) function, and a user may implement applications such as mobile payment, electronic ticketing, access control, mobile identity identification, and anti-counterfeiting by using the mobile terminals. An NFC sensing area of a conventional device is small and is usually limited to a specific part of the device. For example, an NFC sensing area of a mobile phone is only located at a part that is on the top of the mobile phone and that is close to a rear camera. This requires the user to place a specific part of the device close to a tag or a card reader when using the NFC function. Otherwise, a sensing failure occurs easily.

### SUMMARY

This application provides an electronic device, to expand an NFC sensing area, so that a user can implement an NFC function without intentionally placing a specific part of the device close to a tag or a card reader, thereby improving user experience.

According to a first aspect, this application provides an electronic device, including: an NFC chip, a first matching circuit, a first antenna, and a second antenna, where the NFC chip is electrically connected to the first matching circuit; the first antenna includes a first end and a second end, and both the first end and the second end are electrically connected to the NFC chip through the first matching circuit; and the second antenna includes a third end and a fourth end, both the third end and the fourth end are electrically connected to the NFC chip through the first matching circuit; or the third end is electrically connected to the NFC chip through the first matching circuit, and the fourth end is grounded. According to an antenna circuit in this solution, the first antenna and the second antenna may work at the same time. This design may be referred to as a distributed antenna design. According to the distributed antenna design, when the electronic device performs NFC sensing, a user may not need to specially identify and adjust a posture of the electronic device, but may move the electronic device randomly close to a tag or a card reader, to implement an NFC function without precise alignment. Therefore, in the solution of this application, an NFC sensing area is expanded, so that a user operation is simplified, and user experience is improved. The antenna circuit is properly designed, so that the sensing area can even cover all parts of the electronic device. In this way, the user can implement the NFC function by placing any part of the electronic device close to the tag or the card reader, thereby achieving NFC "blind swiping", and greatly improving user experience. In addition, the distributed antenna design in this solution can further increase an impedance bandwidth and improve radiation performance, thereby helping expand an NFC sensing range of the electronic device.

In an implementation of the first aspect, the electronic device further includes a balun and a second matching circuit, the second matching circuit is electrically connected to the first matching circuit through the balun, the third end is electrically connected to the balun through the second matching circuit, and the fourth end is grounded. According to the antenna circuit in this solution, the second antenna may use a single-ended circuit, so that a circuit between the NFC chip and the second antenna is simple, and occupies less structural space.

In an implementation of the first aspect, the second matching circuit includes a third matching circuit and a fourth matching circuit, the fourth matching circuit is electrically connected to the balun through the third matching circuit, and the third end is electrically connected to the third matching circuit through the fourth matching circuit. According to the antenna circuit in this solution, the second antenna may use the single-ended circuit, so that the circuit between the NFC chip and the second antenna is simple, and occupies less structural space. The third matching circuit may be configured to perform impedance matching, so that impedance of an output signal of the balun is adapted to impedance of a circuit following the balun. The fourth matching circuit may be configured to perform impedance matching, so that S11 parameters of the two antenna stubs, namely, the second antenna and the first antenna, can be adjusted to appropriate values, to increase an impedance bandwidth and improve radiation performance, thereby expanding the NFC sensing range of the electronic device.

In an implementation of the first aspect, the electronic device includes a fifth matching circuit and a sixth matching circuit; and the third end is electrically connected to the first matching circuit through the fifth matching circuit, and the fourth end is electrically connected to the first matching circuit through the sixth matching circuit. According to the antenna circuit in this solution, the second antenna may use a dual-ended circuit, so that a product requirement can be met. In addition, impedance matching may be further optimized, and the S11 parameters of the two antenna stubs are adjusted to the appropriate values, to increase the impedance bandwidth and improve radiation performance, thereby expanding the NFC sensing range of the electronic device.

In an implementation of the first aspect, the electronic device includes a seventh matching circuit and an eighth matching circuit, the first end is electrically connected to the first matching circuit through the seventh matching circuit, and the second end is electrically connected to the first matching circuit through the eighth matching circuit. According to the antenna circuit in this solution, both the first antenna and the second antenna may use a dual-ended circuit, so that a product requirement can be met. In addition, impedance matching may be further optimized, and the S11 parameters of the two antenna stubs are adjusted to the appropriate values, to increase the impedance bandwidth and improve radiation performance, thereby expanding the NFC sensing range of the electronic device.

In an implementation of the first aspect, the electronic device includes a fifth matching circuit and a sixth matching circuit; and the first end is electrically connected to the first matching circuit through the fifth matching circuit, the second end is electrically connected to the first matching circuit through the sixth matching circuit, and both the third end and the fourth end are electrically connected to the NFC chip through the first matching circuit. According to the antenna circuit in this solution, the second antenna may use a dual-ended circuit, so that a product requirement can be met. In addition, impedance matching may be further optimized, and the S11 parameters of the two antenna stubs are adjusted to the appropriate values, to increase the impedance bandwidth and improve radiation performance, thereby expanding the NFC sensing range of the electronic device.

In an implementation of the first aspect, the electronic device is a foldable device, the foldable device includes a first part and a second part, and the first part can rotate relative to the second part, so that the first part and the second part are closed, or the first part is unfolded relative to the second part; and the first antenna is located in the first part, and the second antenna is located in the second part. In this solution, the distributed antenna design is applied to the foldable device, so that the NFC sensing range of the foldable device can be increased, significantly enhancing user experience in addressing an NFC sensing pain point of the foldable device.

In an implementation of the first aspect, the first antenna and the second antenna are respectively located at two opposite ends of the electronic device, or are located at a same end of the electronic device. In this solution, positions of the first antenna and the second antenna are properly designed, so that NFC sensing range distribution of the electronic device can be optimized, and user experience can be enhanced.

In an implementation of the first aspect, the electronic device further includes a third antenna and a conductive structure; and the third antenna is used as the second antenna, and/or the conductive structure is used as the second antenna. In this solution, the conductive structure or the third antenna is reused as an NFC antenna, and no additional NFC coupling coil needs to be specially disposed, thus reducing costs. In addition, the antenna can be designed in limited product design space. This improves structure utilization and system integration, and simplifies complexity of the antenna circuit.

In an implementation of the first aspect, the first antenna includes a coupling coil. In this solution, the second antenna is added based on an original NFC coil, so that an original circuit architecture can be used as much as possible, thereby reducing product design and manufacturing difficulty and reducing costs.

According to a second aspect, this application provides an electronic device, including: an NFC chip, a first matching circuit, a balun, a ninth matching circuit, a tenth matching circuit, a first antenna, and a second antenna, where the NFC chip is electrically connected to the first matching circuit; the ninth matching circuit is electrically connected to the first matching circuit through the balun; the first antenna includes a first end and a second end, the first end is electrically connected to the balun through the ninth matching circuit, and the second end is grounded; and the second antenna includes a third end and a fourth end, the third end is electrically connected to the ninth matching circuit through the tenth matching network, and the fourth end is grounded. According to an antenna circuit in this solution, the first antenna and the second antenna may work at the same time. This design may be referred to as a distributed antenna design. According to the distributed antenna design, when the electronic device performs NFC sensing, a user may not need to specially identify and adjust a posture of the electronic device, but may move the electronic device randomly close to a tag or a card reader, to implement an NFC function without precise alignment. Therefore, in the solution of this application, an NFC sensing area is expanded, so that a user operation is simplified, and user experience is improved. The antenna circuit is properly designed, so that the sensing area can even cover all parts of the electronic device. In this way, the user can implement the NFC function by placing any part of the electronic device close to the tag or the card reader, thereby achieving NFC "blind swiping", and greatly improving user experience. In addition, the distributed antenna design in this solution can further increase an impedance bandwidth and improve radiation performance, thereby helping expand an NFC sensing range of the electronic device.

In an implementation of the second aspect, the electronic device includes an eleventh matching circuit, and the first end is electrically connected to the ninth matching circuit through the eleventh matching circuit. According to the antenna circuit in this solution, S11 parameters of the two antenna stubs, namely, the second antenna and the first antenna, can be optimized, an impedance bandwidth can be increased, and radiation performance can be improved, thereby expanding the NFC sensing range of the electronic device. In addition, impedance matching can be implemented more flexibly, and it is easier to adjust the S11 parameters of the two antenna stubs to appropriate values. In addition, consistency of NFC antennas of the electronic device can be further enhanced.

In an implementation of the second aspect, the electronic device includes a foldable device, the foldable device includes a first part and a second part, and the first part can rotate relative to the second part, so that the first part and the second part are closed, or the first part is unfolded relative to the second part; and the first antenna is located in the first part, and the second antenna is located in the second part. In this solution, the distributed antenna design is applied to the foldable device, so that the NFC sensing range of the foldable device can be increased, significantly enhancing user experience in addressing an NFC sensing pain point of the foldable device.

In an implementation of the second aspect, the first antenna and the second antenna are respectively located at two opposite ends of the electronic device, or are located at a same end of the electronic device. In this solution, positions of the first antenna and the second antenna are properly designed, so that NFC sensing range distribution of the electronic device can be optimized, and user experience can be enhanced.

In an implementation of the second aspect, the electronic device includes a third antenna and a conductive structure; and the third antenna is used as the second antenna, and/or the conductive structure is used as the second antenna. In this solution, the conductive structure or the third antenna is reused as an NFC antenna, and no additional NFC coupling coil needs to be specially disposed, so that costs can be reduced. In addition, the antenna can be designed in limited product design space. This improves structure utilization and system integration, and simplifies complexity of the antenna circuit.

### BRIEF DESCRIPTION OF DRAWINGS

FIG. 1 is a diagram of a hardware framework of an electronic device according to an embodiment of this application;
FIG. 2 is a diagram of an NFC antenna circuit of an electronic device according to an embodiment of this application;
FIG. 3 is a diagram of distribution of sensing areas of an electronic device according to an embodiment of this application;
FIG. 4 is a diagram of comparison between an NFC field diagram of a conventional mobile phone and an NFC field diagram of a mobile phone shown in FIG. 3;
FIG. 5a is a diagram of distribution of sensing areas of an electronic device according to another embodiment of this application;
FIG. 5b is a diagram of distribution of sensing areas of an electronic device according to another embodiment of this application;
FIG. 6 is a diagram of comparison between an impedance bandwidth in a solution according to an embodiment of this application and an impedance bandwidth in a conventional solution;
FIG. 7 is a diagram of an NFC antenna circuit of an electronic device according to another embodiment of this application;
FIG. 8 is a diagram of an NFC antenna circuit of an electronic device according to another embodiment of this application;
FIG. 9 is a diagram of an NFC antenna circuit of an electronic device according to another embodiment of this application;
FIG. 10 is a diagram of an NFC antenna circuit of an electronic device according to another embodiment of this application;
FIG. 11 is a diagram of an NFC antenna circuit of an electronic device according to another embodiment of this application;
FIG. 12 is a diagram of distribution of sensing areas of an electronic device according to another embodiment of this application;
FIG. 13 is a diagram of distribution of sensing areas of the electronic device shown in FIG. 12 in a folded state; and
FIG. 14 is a diagram of distribution of sensing areas of an electronic device according to another embodiment of this application.

### DESCRIPTION OF EMBODIMENTS

An embodiment of this application provides an electronic device, including but not limited to a mobile phone (for example, a bar-type mobile phone, a foldable mobile phone, or a mobile phone with a scroll screen), a wearable device (for example, a smartwatch, a smart band, smart glasses, or a smart helmet), a tablet computer, a laptop computer, a vehicle-mounted device (for example, a head unit), and the like.

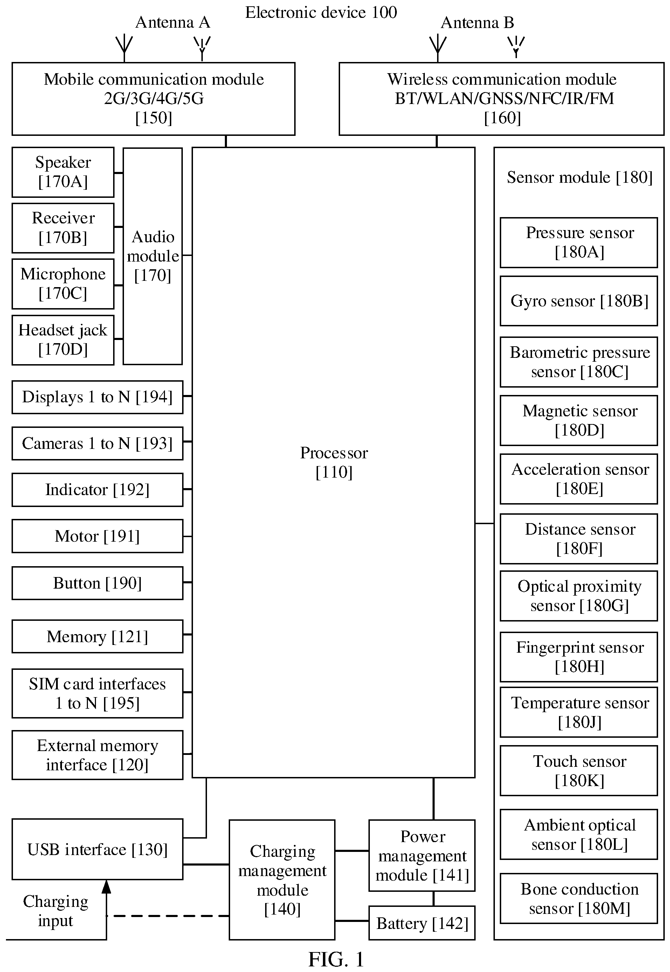

FIG. 1 is a diagram of a structure of an electronic device 100. The following uses the electronic device 100 as an example for specific description. It should be understood that the electronic device 100 shown in FIG. 1 is merely an example. The electronic device 100 may have more or fewer components than those shown in FIG. 1, may combine two or more components, or may have different component configurations. Various components shown in FIG. 1 may be implemented in hardware, software, or a combination of hardware and software that includes one or more signal processors and/or application-specific integrated circuits.

As shown in FIG. 1, the electronic device 100 may include a processor 110, an external memory interface 120, a memory 121, a universal serial bus (universal serial bus, USB) interface 130, a charging management module 140, a power management module 141, a battery 142, an antenna A, an antenna B, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like. It may be understood that an interface connection relationship between the modules illustrated in embodiments of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners. A wireless communication function of the electronic device 100 may be implemented through the antenna A, the antenna B, the mobile communication module 150, the wireless communication module 160, the modem processor, the baseband processor, and the like.

The foregoing summarizes a hardware architecture of the electronic device with reference to FIG. 1. The following describes in detail an NFC antenna circuit of an electronic device. A plurality of NFC antennas may be disposed in the NFC antenna circuit.

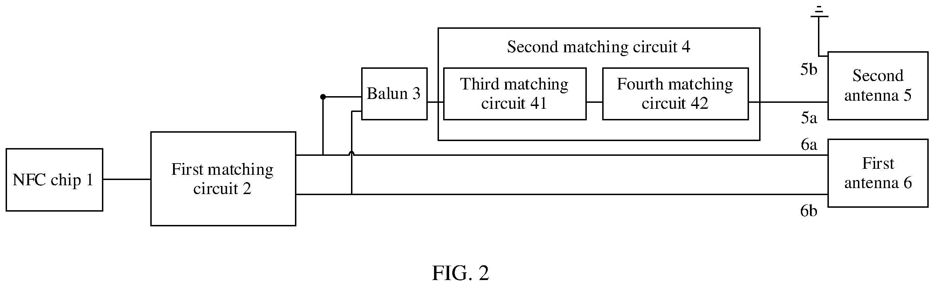

FIG. 2 is a diagram of an NFC antenna circuit in an electronic device according to Embodiment 1. As shown in FIG. 2, the electronic device in this embodiment may include an NFC chip 1, a first matching circuit 2, a first antenna 6, a balun 3, a second matching circuit 4, and a second antenna 5. Both the first antenna 6 and the second antenna 5 may be referred to as NFC antennas.

As shown in FIG. 2, an input end of the first matching circuit 2 may be electrically connected to a pin of the NFC chip 1, and an output end of the first matching circuit 2 may be electrically connected to both a first end 6a and a second end 6b of the first antenna 6. In addition, the output end of the first matching circuit 2 may be further electrically connected to an input end of the balun 3. An output end of the balun 3 may be electrically connected to an input end of the second matching circuit 4. An output end of the second matching circuit 4 may be electrically connected to a third end 5a of the second antenna 5. A fourth end 5b of the second antenna 5 may be grounded.

The NFC chip 1 may be configured to modulate and demodulate a radio frequency signal, process an NFC protocol, and the like. The NFC chip 1 may include several ports, and the NFC chip 1 may output the radio frequency signal through the ports. The NFC chip 1 may integrate functions such as an induction card reader, an induction card, and peer-to-peer communication, and can perform identification and data exchange with a compatible device within a short distance. A specific type of the NFC chip 1 may be determined based on a product requirement, and is not limited in this embodiment.

As shown in FIG. 2, the first matching circuit 2 is a matching circuit that electrically connects the NFC chip 1 to the balun 3 and electrically connects the NFC chip 1 to the first antenna 6. The first matching circuit 2 may be configured to perform impedance matching, so that signal impedance of the NFC chip 1 is adapted to impedance of a circuit following the first matching circuit 2 (the circuit includes the balun 3, the second matching circuit 4, the first antenna 6, and the second antenna 5).

As shown in FIG. 2, the first antenna 6 is used as an NFC antenna. The first end 6a and the second end 6b of the first antenna 6 are electrically connected to two output ends of the first matching circuit 2 respectively. Therefore, a circuit of the first antenna 6 may be a dual-ended circuit.

For example, the first antenna 6 may be a coupling coil specially used for NFC sensing. Alternatively, the first antenna 6 may be a conductive structure in the electronic device. In other words, the conductive structure may be reused as an NFC antenna. The conductive structure includes but is not limited to a structural feature of a housing of the electronic device (for example, a bezel part of a middle frame of a mobile phone, a rib or a boss in the housing, or the like), a support, a charging coil, a rigid circuit board, a flexible circuit board, or another conductor. Alternatively, the first antenna 6 may be a third antenna in the electronic device. In other words, the third antenna may be reused as an NFC antenna. The third antenna includes but is not limited to a main cellular antenna, a diversity antenna, a wireless network (for example, Wi-Fi, 802.11, or Bluetooth) antenna, or a positioning antenna (for example, a GPS antenna or a BeiDou navigation antenna). The conductive structure or the third antenna is reused as an NFC antenna, and no additional NFC coupling coil needs to be specially disposed, thus reducing costs. In addition, the antenna can be designed in limited product design space. This improves structure utilization and system integration, and simplifies complexity of the antenna circuit.

As shown in FIG. 2, the balun 3 may be electrically connected to the two output ends of the first matching circuit 2. The balun 3 may also be referred to as a balanced-unbalanced transformer, and is configured to transform a dual-ended circuit into a single-ended circuit (which is described below, and a circuit of the second antenna 5 is a single-ended circuit).

As shown in FIG. 2, the second matching circuit 4 is a matching circuit that electrically connects the balun 3 to the second antenna 5. The second matching circuit 4 may be configured to perform impedance matching, so that impedance of an output signal of the balun 3 is adapted to impedance of the second antenna 5. In some implementations, the second matching circuit 4 and the balun 3 may alternatively be integrated into one component. The component has both functions of the second matching circuit 4 and the balun 3. The component may be referred to as, for example, a balun with an impedance tuning function.

As shown in FIG. 2, for example, the second matching circuit 4 may include a third matching circuit 41 and a fourth matching circuit 42. The third matching circuit 41 may electrically connect the balun 3 to the fourth matching circuit 42, and the fourth matching circuit 42 may electrically connect the third matching circuit 41 to the third end 5a of the second antenna 5. The third matching circuit 41 may be configured to perform impedance matching, so that impedance of an output signal of the balun 3 is adapted to impedance of a circuit following the balun 3 (the circuit includes the fourth matching circuit 42 and the second antenna 5). The fourth matching circuit 42 may be configured to perform impedance matching, so that S11 parameters of two antenna stubs, namely, the second antenna 5 and the first antenna 6, may be adjusted to appropriate values (for example, less than -10 dB), to increase an impedance bandwidth and improve radiation performance, thereby expanding an NFC sensing range of the electronic device (which is further described below). In addition, the fourth matching circuit 42 is designed to further enhance consistency of the NFC antennas of the electronic device.

It may be understood that two independent matching circuits, namely, the third matching circuit 41 and the fourth matching circuit 42, may be designed, or the third matching circuit 41 and the fourth matching circuit 42 may be integrated into one matching circuit (used as the second matching circuit 4).

As shown in FIG. 2, the second antenna 5 is used as another NFC antenna. The third end 5a of the second antenna 5 is electrically connected to the fourth matching circuit 42, and the fourth end 5b of the second antenna 5 is grounded. Therefore, the circuit of the second antenna 5 may be a single-ended circuit. The single-ended circuit is used, so that a circuit between the NFC chip 1 and the second antenna 5 is simple, and occupies less structural space.

For example, the second antenna 5 may be a conductive structure in the electronic device. In other words, the conductive structure may be reused as an NFC antenna. The conductive structure includes but is not limited to a housing of the electronic device (for example, a bezel part of a middle frame of a mobile phone), a structural feature in the housing (for example, a rib or a boss), a support, a rigid circuit board, a flexible circuit board, or another conductor. Alternatively, the second antenna 5 may be a third antenna in the electronic device. In other words, the third antenna may be reused as an NFC antenna. The third antenna includes but is not limited to a main cellular antenna, a diversity antenna, a wireless network (for example, Wi-Fi, 802.11, or Bluetooth) antenna, or a positioning antenna (for example, a GPS antenna or a BeiDou navigation antenna). The conductive structure or the third antenna is reused as an NFC antenna, and no additional NFC coupling coil needs to be specially disposed, thus reducing costs. In addition, the antenna can be designed in limited product design space. This improves structure utilization and system integration, and simplifies complexity of the antenna circuit. Alternatively, the second antenna 5 may be a coupling coil specially used for NFC sensing.

As shown in FIG. 2, the radio frequency signal of the NFC chip 1 may be transmitted to the first antenna 6 through the first matching circuit 2, and is radiated through the first antenna 6. In addition, the radio frequency signal of the NFC chip 1 may be transmitted to the second antenna 5 through the balun 3 and the second matching circuit 4, and is radiated through the second antenna 5. According to an antenna circuit shown in FIG. 2, the two NFC antennas, namely, the first antenna 6 and the second antenna 5, may work at the same time. This design may be referred to as a distributed antenna design.

In some implementations, if impedance of the second antenna 6 is properly and accurately designed to match signal impedance of the NFC chip 1, the balun 3 and the second matching circuit 4 may be omitted.

In this embodiment, the two NFC antennas have different positions in the electronic device. Therefore, different areas of the electronic device may all be sensing areas, so that a sensing area of the electronic device is large.

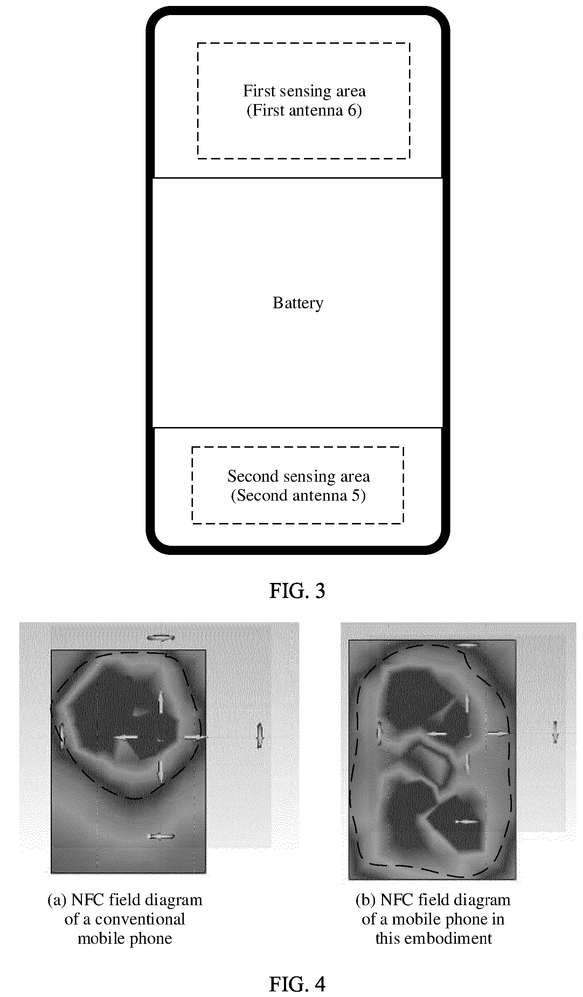

In an implementation, the first antenna 6 and the second antenna 5 may be respectively located at two opposite ends of the electronic device. For example, for a mobile phone, one of the first antenna 6 and the second antenna 5 may be disposed at the top of the mobile phone (an end close to a camera), and the other may be disposed at the bottom of the mobile phone (an end away from the camera). For example, as shown in FIG. 3, the first antenna 6 may be disposed at the top of the mobile phone, and the second antenna 5 may be disposed at the bottom of the mobile phone. An area in which the first antenna 6 is located forms a first sensing area, and an area in which the second antenna 5 is located forms a second sensing area. In comparison with a conventional mobile phone whose sensing area is only on the top, in this embodiment, the sensing area may cover the top and the bottom of the mobile phone. Therefore, the sensing area is expanded.

A simulation field diagram may be used to represent distribution of sensing signals in a product. FIG. 4 shows comparison between an NFC field diagram of a conventional mobile phone and an NFC field diagram of the mobile phone shown in FIG. 3. For ease of image recognition, in FIG. 4, a dashed line is used to show an approximate coverage area of sensing signals, and a dark area indicates an area with high signal strength. It can be learned through comparison that, in the NFC field diagram of the conventional mobile phone, sensing signals are basically distributed on the top of the mobile phone, and a sensing area is small. However, in the NFC field diagram of the mobile phone in this embodiment, the sensing signal not only covers the top of the mobile phone, but also covers the bottom of the mobile phone, and the sensing area is large.

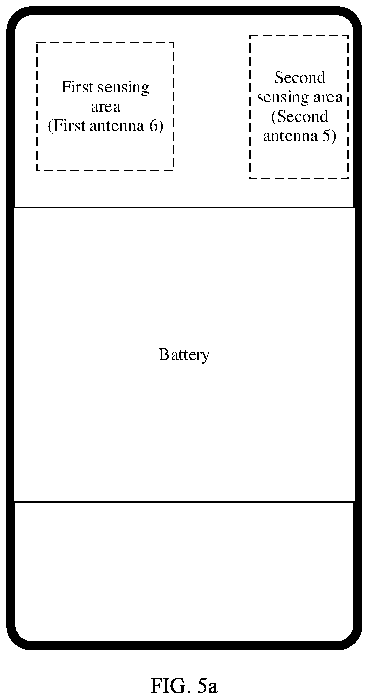

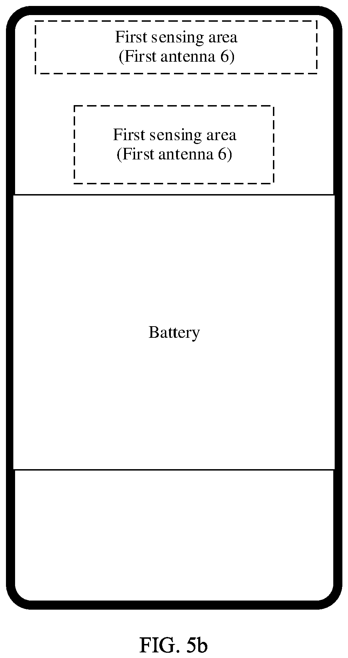

In another implementation, the first antenna 6 and the second antenna 5 may be located at a same end of the electronic device, and may be close to each other. As shown in FIG. 5a, both the first antenna 6 and the second antenna 5 may be located at the top of the mobile phone, and the second antenna 5 may be distributed along a long side of the mobile phone. As shown in FIG. 5b, both the first antenna 6 and the second antenna 5 may be located at the top of the mobile phone, and the second antenna 5 may be distributed along a short side of the mobile phone. It may be understood that FIG. 5a and FIG. 5b are merely examples. Actually, the two NFC antennas may be disposed at any proper position of the mobile phone, provided that the two NFC antennas are close to each other.

In the implementations shown in FIG. 5a and FIG. 5b, the first antenna 6 may be, for example, a coupling coil (or a conductive structure reused as an NFC antenna or a third antenna), and the second antenna 5 may be, for example, a conductive structure reused as an NFC antenna or a third antenna (or a coupling coil). In a solution, the coupling coil may maintain a conventional volume, and the second sensing area is added near the first sensing area, so that field strength distribution at the top of the mobile phone can be increased, and the sensing area is expanded as a whole. In comparison with the previous solution, in another solution, a volume of the coupling coil may be reduced, and a size of the sensing area on the top of the mobile phone basically remains unchanged in comparison with that in the previous solution (that is, the sensing area may also be expanded in this solution), to ensure NFC performance. In this design, the volume of the coupling coil can be reduced to save structural space and improve architecture competitiveness of a product.

For the conventional mobile phone, the user may need to determine whether the top of the mobile phone is in a proper holding position. If the top of the mobile phone faces downward in a hand, a user may need to rotate the mobile phone 180 degrees to make the top face upward, so that the top is accurately close to a tag or a card reader. However, when the electronic device in this embodiment is used to perform NFC sensing, the user may not need to specially identify and adjust a posture of the electronic device, but may move the electronic device randomly close to the tag or the card reader (for example, the top or the bottom of the mobile phone may be optionally placed close to the tag or the card reader). The NFC function can be implemented without precise alignment. In comparison with a conventional solution, the solution in this embodiment simplifies a user operation by expanding the NFC sensing area, thereby improving user experience.

In this embodiment, the antenna circuit is properly designed, so that the sensing area can even cover all parts (not limited to the top and the bottom) of the electronic device. In this way, the user can implement the NFC function by placing any part of the electronic device close to the tag or the card reader, thereby achieving NFC "blind swiping", and greatly improving user experience.

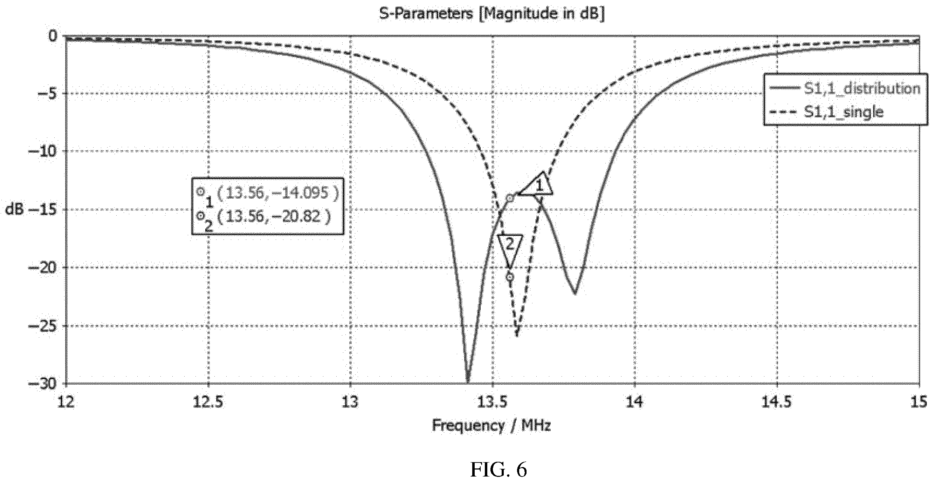

The distributed antenna design in this embodiment can further increase an impedance bandwidth and improve radiation performance, thereby helping expand the NFC sensing range of the electronic device. FIG. 6 shows comparison between an impedance bandwidth in the solution according to this embodiment and an impedance bandwidth in a conventional solution. A dashed line corresponds to the conventional solution, and a solid line corresponds to the solution in this embodiment. As shown in FIG. 6, when an S11 parameter is -10 dB, the frequency bandwidth in the solution in this embodiment is obviously greater than the frequency bandwidth in the conventional solution. For example, the frequency bandwidth in the solution in this embodiment may be increased by 139% in comparison with that in the conventional solution.

In another embodiment, based on the solution in Embodiment 1, more NFC antennas may be designed. For example, there may be at least three NFC antennas, and these NFC antennas adopt a distributed design approach.

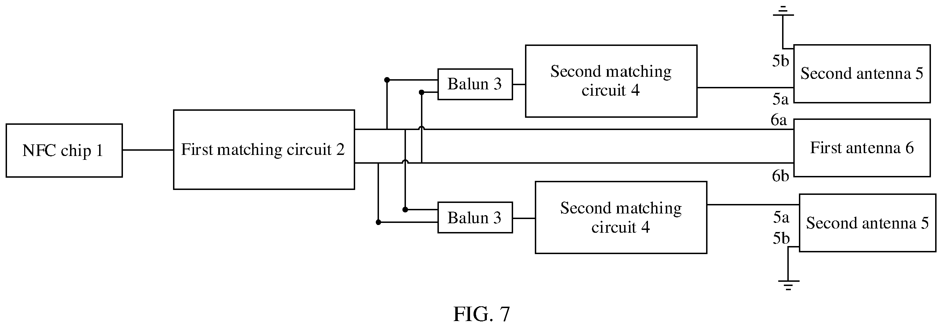

For example, in the solution shown in FIG. 7, two second antennas 5 may be designed. Correspondingly, two circuits of the second antenna 5 may be designed, compositions of the two circuits may be consistent, and the two circuits may be connected in parallel to the output end of the first matching circuit 2. Alternatively, in another solution, there may be one second antenna 5, there may be at least two first antennas 6, and these first antennas 6 may be connected in parallel to the output end of the first matching circuit 2. The plurality of distributed NFC antennas are designed, so that the sensing area can be further expanded, and a user operation can be simplified, thereby improving user experience.

In another solution, if two second antennas 5 are designed, circuits of the two second antennas 5 may be inconsistent. For example, one circuit is a single-ended circuit, and the other circuit is a dual-ended circuit. Alternatively, the two circuits are both single-ended circuits or dual-ended circuits, but the two circuits have different structural compositions. Similarly, if two first antennas 6 are designed, circuits of the two first antennas 6 may be inconsistent. For example, one circuit is a dual-ended circuit, and the other circuit is a single-ended circuit. Alternatively, the two circuits are both dual-ended circuits or single-ended circuits, but the two circuits have different structural compositions.

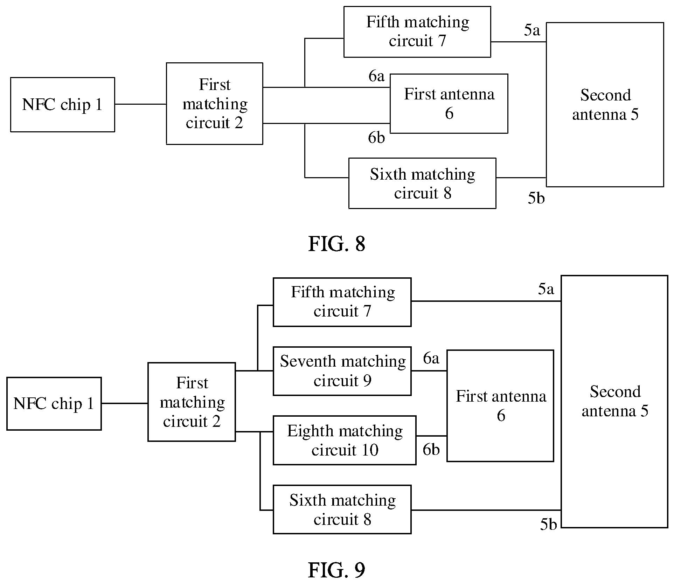

FIG. 8 is a diagram of an NFC antenna circuit in an electronic device according to an implementation of Embodiment 2.

As shown in FIG. 8, the NFC antenna circuit in this implementation may include an NFC chip 1, a first matching circuit 2, a first antenna 6, a fifth matching circuit 7, a sixth matching circuit 8, and a second antenna 5.

It can be learned by comparing FIG. 8 and FIG. 2 that, different from Embodiment 1, a circuit of the second antenna 5 in Embodiment 2 may use a dual-ended circuit. In other words, both the second antenna 5 and the first antenna 6 in Embodiment 2 use a dual-ended circuit. As shown in FIG. 8, an input end of the fifth matching circuit 7 may be electrically connected to one output end of the first matching circuit 2, and an output end of the fifth matching circuit 7 may be electrically connected to a third end 5a of the second antenna 5. An input end of the sixth matching circuit 8 may be electrically connected to the other output end of the first matching circuit 2, and an output end of the sixth matching circuit 8 may be electrically connected to a fourth end 5b of the second antenna 5.

In this implementation, after the fifth matching circuit 7 and the sixth matching circuit 8 are designed, S11 parameters of the two antenna stubs, namely, the second antenna 5 and the first antenna 6, may be adjusted to appropriate values (for example, less than -10 dB), to increase an impedance bandwidth and improve radiation performance, thereby expanding an NFC sensing range of the electronic device. In addition, consistency of NFC antennas of the electronic device can be further enhanced.

As shown in FIG. 8, a radio frequency signal of the NFC chip 1 may be transmitted to the first antenna 6 through the first matching circuit 2, and is radiated through the first antenna 6. In addition, the radio frequency signal of the NFC chip 1 may be transmitted to the second antenna 5 through the fifth matching circuit 7 and the sixth matching circuit 8, and is radiated through the second antenna 5. Therefore, the two NFC antennas, namely, the first antenna 6 and the second antenna 8, may work at the same time. This design may be referred to as a distributed antenna design.

In the solution of this implementation, a distributed antenna design can expand a sensing area of the electronic device, simplify a user operation, and improve user experience. When a conductive structure or a third antenna is used as the NFC antenna, costs can be further reduced, structure utilization and system integration can be improved, and complexity of the antenna circuit can be reduced. When one of the NFC antennas uses a coupling coil, two NFC antennas are disposed at a same end of the electronic device, so that a volume of the coupling coil can be reduced to save structural space, thereby improving architecture competitiveness of a product.

In another implementation of Embodiment 2, different from that shown in FIG. 8, the fifth matching circuit 7 and the sixth matching circuit 8 may be disposed in a circuit of the first antenna 6, instead of being disposed in a circuit of the second antenna 5. In other words, positions of the first antenna 6 and the second antenna 5 in FIG. 8 may be exchanged, to obtain another solution.

Based on the solution in Embodiment 2, in another embodiment, more NFC antennas may be designed. For example, there may be at least three NFC antennas, and these NFC antennas adopt a distributed design approach. For example, at least two second antennas 5 may be designed, and a circuit of each second antenna 5 may use the dual-ended circuit shown in FIG. 8.

Based on the solution shown in FIG. 8, an NFC antenna circuit in Embodiment 3 shown in FIG. 9 may be designed.

By comparing FIG. 9 and FIG. 8, in Embodiment 3, a seventh matching circuit 9 and an eighth matching circuit 10 may be added to the circuit of the first antenna 6. An input end of the seventh matching circuit 9 is electrically connected to one output end of the first matching circuit 2, and an output end of the seventh matching circuit 9 is electrically connected to a first end of the first antenna 6. An input end of the eighth matching circuit 10 is electrically connected to the other output end of the first matching circuit 2, and an output end of the eighth matching circuit 10 is electrically connected to a second end of the first antenna 6.

In Embodiment 3, the two NFC antennas, namely, the first antenna 6 and the second antenna 5, may work at the same time. This design may be referred to as a distributed antenna design. A fifth matching circuit 7 to an eighth matching circuit 10 are designed in circuits of the two NFC antennas, so that S11 parameters of the two antenna stubs can be adjusted to appropriate values (for example, less than -10 dB), to increase an impedance bandwidth and improve radiation performance, thereby expanding an NFC sensing range of the electronic device. In addition, impedance matching can be implemented more flexibly, and it is easier to adjust the S11 parameters of the two antenna stubs to appropriate values. In addition, consistency of NFC antennas of the electronic device can be further enhanced.

In the solution in Embodiment 3, a distributed antenna design can expand a sensing area of the electronic device, simplify a user operation, and improve user experience. When a conductive structure or a third antenna is used as the NFC antenna, costs can be further reduced, structure utilization and system integration can be improved, and complexity of the antenna circuit can be reduced. When one of the NFC antennas uses a coupling coil, two NFC antennas are disposed at a same end of the electronic device, so that a volume of the coupling coil can be reduced to save structural space, thereby improving architecture competitiveness of a product.

Based on the solution in Embodiment 3, in another embodiment, more NFC antennas may be designed. For example, there may be at least three NFC antennas, and these NFC antennas adopt a distributed design approach. For example, at least two second antennas 5 may be designed, and a circuit of each second antenna 5 may use the dual-ended circuit shown in FIG. 9.

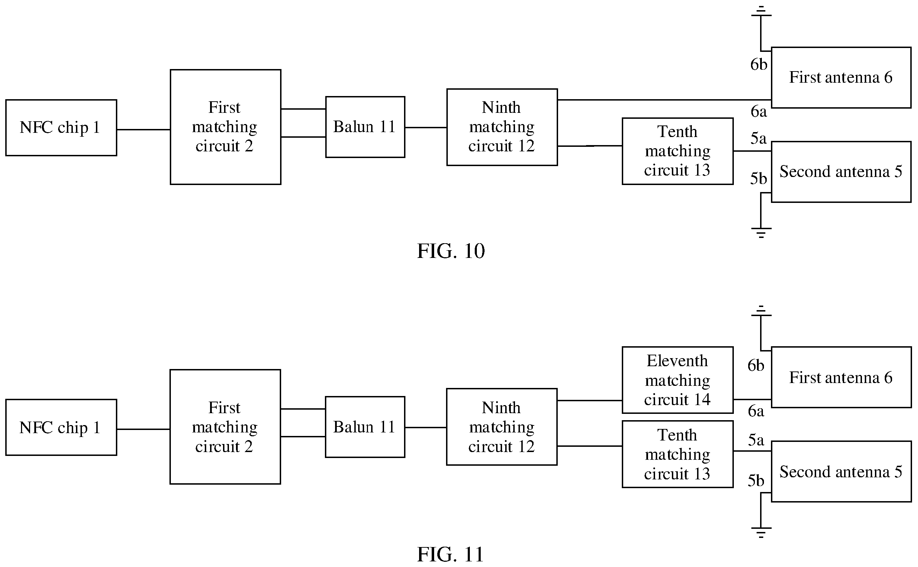

FIG. 10 is a diagram of an NFC antenna circuit in an electronic device according to Embodiment 4.

As shown in FIG. 10, the NFC antenna circuit in Embodiment 4 includes an NFC chip 1, a first matching circuit 2, a balun 11, a ninth matching circuit 12, a first antenna 6, a tenth matching circuit 13, and a second antenna 5.

As shown in FIG. 10, different from the foregoing embodiment, an input end of a balun 11 is electrically connected to an output end of a first matching circuit 2. An output end of the balun 11 is electrically connected to an input end of a ninth matching circuit 12. One output end of the ninth matching circuit 12 is electrically connected to a first end 6a of the first antenna 6. The other output end of the ninth matching circuit 12 is electrically connected to an input end of the tenth matching circuit 13. An output end of the tenth matching circuit 13 is electrically connected to a third end 5a of the second antenna 5. A second end 6b of the first antenna 6 is grounded, and a fourth end 5b of the second antenna 5 is grounded.

In this embodiment, the balun 11 may also be referred to as a balanced-unbalanced transformer, and is configured to transform a dual-ended circuit into a single-ended circuit. The ninth matching circuit 12 is configured to tune impedance, so that impedance of an output signal of the balun 11 is adapted to impedance of a circuit following the balun 11. In some implementations, the ninth matching circuit 12 and the balun 11 may alternatively be integrated into one component. The component has both functions of the ninth matching circuit 12 and the balun 11. The component may be referred to as, for example, a balun with an impedance tuning function. The tenth matching circuit 13 is configured to tune impedance, so that S11 parameters of the two antenna stubs, namely, the second antenna 5 and the first antenna 6, are adjusted to appropriate values (for example, less than -10 dB), to increase an impedance bandwidth and improve radiation performance, thereby expanding an NFC sensing range of the electronic device. In addition, consistency of the NFC antennas of the electronic device can be further enhanced.

In this embodiment, both the first antenna 6 and the second antenna 5 use a single-ended circuit. The single-ended circuit is used, so that a circuit between the NFC chip 1 and the two NFC antennas is simple, and occupies less structural space.

In this embodiment, the two NFC antennas, namely, the first antenna 6 and the second antenna 5, may work at the same time. This design may be referred to as a distributed antenna design. A distributed antenna design can expand a sensing area of the electronic device, simplify a user operation, and improve user experience. When a conductive structure or a third antenna is used as the NFC antenna, costs can be further reduced, structure utilization and system integration can be improved, and complexity of the antenna circuit can be reduced. When one of the NFC antennas uses a coupling coil, two NFC antennas are disposed at a same end of the electronic device, so that a volume of the coupling coil can be reduced to save structural space, thereby improving architecture competitiveness of a product.

Based on the solution in Embodiment 4, in another embodiment, more NFC antennas may be designed. For example, there may be at least three NFC antennas, and these NFC antennas adopt a distributed design approach.

For example, in a solution, a circuit of a plurality of second antennas 5 may be designed based on the circuit shown in FIG. 10. Each circuit includes a tenth matching circuit 13 and a second antenna 5. Each second antenna 5 is electrically connected to a ninth matching circuit 12 through the tenth matching circuit 13. The plurality of tenth matching circuits 13 are connected in parallel to an output end of the ninth matching circuit 12.

Based on the solution shown in FIG. 10, a diagram of an NFC antenna circuit in Embodiment 5 shown in FIG. 11 may be designed. As shown in FIG. 11, different from the solution shown in FIG. 10, in the NFC antenna circuit in Embodiment 5, an eleventh matching circuit 14 may be further added to the circuit of the first antenna 6, and the eleventh matching circuit 14 is electrically connected between the ninth matching circuit 12 and the first end 6a of the first antenna 6. The eleventh matching circuit 14 is configured to perform impedance tuning, and can optimize S11 parameters of the two antenna stubs, namely, the second antenna 5 and the first antenna 6, to increase an impedance bandwidth and improve radiation performance, thereby expanding an NFC sensing range of the electronic device. In addition, impedance matching can be implemented more flexibly, and it is easier to adjust the S11 parameters of the two antenna stubs to appropriate values. In addition, consistency of NFC antennas of the electronic device can be further enhanced. In addition, Embodiment 5 also has advantages of Embodiment 4, and details are not described herein again.

Based on the solution in Embodiment 5, in another embodiment, more NFC antennas may be designed. For example, there may be at least three NFC antennas, and these NFC antennas adopt a distributed design approach.

For example, in a solution, a circuit of a plurality of second antennas 5 may be designed based on the circuit shown in FIG. 11. Each circuit includes a tenth matching circuit 13 and a second antenna 5. Each second antenna 5 is electrically connected to a ninth matching circuit 12 through the tenth matching circuit 13. The plurality of tenth matching circuits 13 are connected in parallel to an output end of the ninth matching circuit 12. Alternatively, a circuit of a plurality of first antennas 6 may be designed based on the circuit shown in FIG. 11. Each circuit includes an eleventh matching circuit 14 and a first antenna 6. Each first antenna 6 is electrically connected to a ninth matching circuit 12 through the eleventh matching circuit 14. The plurality of eleventh matching circuits 14 are connected in parallel to an output end of the ninth matching circuit 12.

The electronic device in the foregoing embodiments may be, for example, a bar-type mobile phone. The following describes application of the NFC antenna design in the foregoing embodiment to a foldable mobile phone.

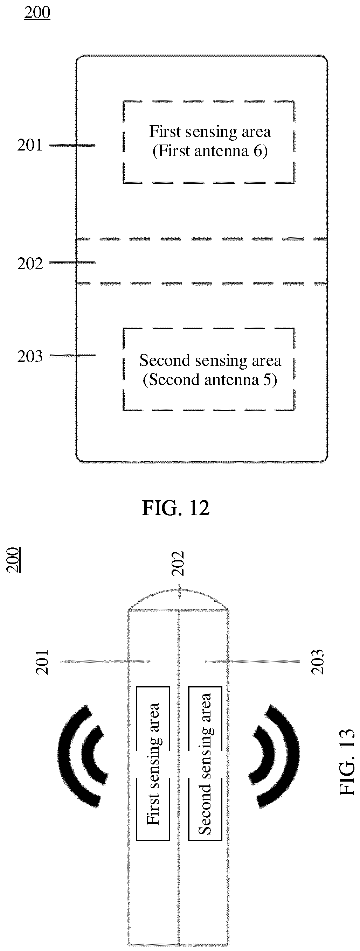

As shown in FIG. 12, an electronic device 200 in Embodiment 6 may be a foldable mobile phone, and may include a first part 201, a hinge 202, and a second part 203. The hinge 202 is connected to the first part 201 and the second part 203. The hinge 202 may generate a mechanism motion, so that the first part 201 and the second part 203 can rotate relative to each other. When the first part 201 and the second part 203 are completely closed, the foldable mobile phone is in a folded state. When the first part 201 is completely unfolded relative to the second part 203, the foldable mobile phone is in a fully unfolded state. When the first part 201 is unfolded at a specific angle relative to the second part 203 but is not fully unfolded, the foldable mobile phone is in a middle unfolded state.

A folding form shown in FIG. 12 may be referred to as a "clamshell type". In other words, when a user normally holds a device, an opening and closing line of the device is in a transverse direction. This is merely an example, and is not intended to limit Embodiment 6. For example, the solution in Embodiment 6 is also applicable to a "book-type" folding form. In other words, when the user normally holds the device, the opening and closing line of the device is in a portrait direction.

As shown in FIG. 12, the first antenna 6 may be disposed in the first part 201. Therefore, a first sensing area is formed in the first part 201. It may be understood that the first antenna 6 may be disposed at any proper position in the first part 201. The second antenna 5 may be disposed in the second part 203. Therefore, a second sensing area is formed in the second part 203. It may be understood that the second antenna 5 may be disposed at any proper position in the second part 203.

For example, the first antenna 6 and the second antenna 5 may be respectively located at two opposite ends of the electronic device 200. For example, the first antenna 6 may be disposed at one end of the first part 201, and the second antenna 5 may be disposed at one end of the second part 203. For example, the first antenna 6 and the second antenna 5 are respectively disposed at the top and the bottom of the electronic device 200. When the electronic device 200 is in the unfolded state shown in FIG. 12, both the top and the bottom of the electronic device 200 may implement NFC sensing.

FIG. 13 shows that the foldable device is in a folded state. As shown in FIG. 13, NFC sensing may be implemented on both a left side and a right side of the foldable device.

Therefore, the NFC antenna design in this embodiment of this application is applied to the foldable mobile phone, so that sensing areas of the foldable mobile phone in both the folded state and the unfolded state can be expanded, thereby improving NFC use experience of the foldable mobile phone.

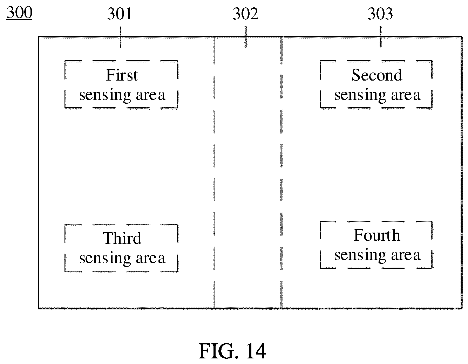

As shown in FIG. 14, an electronic device 300 in Embodiment 7 may be a foldable mobile phone, and may include a first part 301, a hinge 302, and a third part 303. The hinge 302 is connected to the first part 301 and the third part 303. The hinge 302 may generate a mechanism motion, so that the first part 301 and the third part 303 can rotate relative to each other. When the first part 301 and the third part 303 are completely closed, the foldable mobile phone is in a folded state. When the first part 301 is completely unfolded relative to the third part 303, the foldable mobile phone is in a fully unfolded state (for example, a state shown in FIG. 14). When the first part 301 is unfolded at a specific angle relative to the third part 303 but is not fully unfolded, the foldable mobile phone is in a middle unfolded state.

A folding form shown in FIG. 14 may be referred to as a "book type". In other words, when a user normally holds a device, an opening and closing line of the device is in a portrait direction. This is merely an example, and is not intended to limit Embodiment 6. For example, the solution in Embodiment 7 is also applicable to a "clamshell type" folding form. In other words, when the user normally holds the device, the opening and closing line of the device is in the transverse direction.

As shown in FIG. 14, four NFC antennas may be disposed in the electronic device 300, to form a first sensing area, a second sensing area, a third sensing area, and a fourth sensing area. An NFC antenna in each sensing area may be the first antenna 6 or the second antenna 5. Two sensing areas may be disposed in each of the first part 301 and the third part 303.

Therefore, after the electronic device 300 is fully unfolded, NFC sensing may be performed at all four corners of the electronic device 300. When the electronic device 300 is folded, both an upper part and a lower part of the electronic device 300 may implement NFC sensing. Therefore, the NFC antenna design in this embodiment of this application is applied to the electronic device 300, so that sensing areas of the electronic device 300 in both the folded state and the unfolded state can be expanded, thereby improving NFC use experience of the foldable mobile phone.

It may be understood that a quantity and distribution of sensing areas shown in FIG. 14 are merely examples. Based on a product requirement, more or fewer sensing areas may be designed in the electronic device 300, and quantities of sensing areas in the first part 301 and the third part 303 may also be designed based on a requirement.

For example, any one of the foregoing matching circuits may include a capacitor and/or an inductor. There may be one or more capacitors and inductors, and the capacitor and the inductor may be electrically connected in series and/or in parallel.

In the descriptions of the embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of the embodiments of this application, "a plurality of" means two or more.

In the following, terms such as "first" and "second" are used only for description purposes, and cannot be understood as implying or implying relative importance or implicitly indicating a quantity of indicated technical features. Therefore, a feature limited by "first" or "second" may explicitly or implicitly include one or more features.

Orientation terms mentioned in embodiments of this application, for example, "up", "down", "front", "back", "left", "right", "inside", "outside", "side face", "top", and "bottom", are merely directions in the accompanying drawings. Therefore, the orientation terms are used to better and more clearly describe and understand embodiments of this application, instead of indicating or implying that a specified apparatus or element needs to have a specific orientation, and be constructed and operated in the specific orientation. Therefore, this cannot be understood as a limitation on embodiments of this application.

In the descriptions of embodiments of this application, it should be noted that unless otherwise explicitly specified and limited, the terms "mounted", "connected", "connection", and "disposed on..." should be understood in a broad sense. For example, a "connection" may be a detachable connection, a non-detachable connection, a direct connection, or an indirect connection implemented through an intermediate medium. "Fastening" means that two parts are connected to each other and a relative position relationship remains unchanged after the two parts are connected. "Rotatable connection" means that two parts are connected to each other and can rotate relative to each other after the two parts are connected to each other. "Slidable connection" means that two parts are connected to each other and can slide relative to each other after the two parts are connected to each other.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An electronic device, comprising:
an NFC chip, a first matching circuit, a first antenna, and a second antenna, wherein
the NFC chip is electrically connected to the first matching circuit;
the first antenna comprises a first end and a second end, and both the first end and the second end are electrically connected to the NFC chip through the first matching circuit; and
the second antenna comprises a third end and a fourth end, both the third end and the fourth end are electrically connected to the NFC chip through the first matching circuit; or the third end is electrically connected to the NFC chip through the first matching circuit, and the fourth end is grounded.

2. The electronic device according to claim 1, wherein
the electronic device further comprises a balun and a second matching circuit, the second matching circuit is electrically connected to the first matching circuit through the balun, the third end is electrically connected to the balun through the second matching circuit, and the fourth end is grounded.

3. The electronic device according to claim 2, wherein
the second matching circuit comprises a third matching circuit and a fourth matching circuit, the fourth matching circuit is electrically connected to the balun through the third matching circuit, and the third end is electrically connected to the third matching circuit through the fourth matching circuit.

4. The electronic device according to claim 1, wherein
the electronic device comprises a fifth matching circuit and a sixth matching circuit; and
the third end is electrically connected to the first matching circuit through the fifth matching circuit, and the fourth end is electrically connected to the first matching circuit through the sixth matching circuit.

5. The electronic device according to claim 4, wherein
the electronic device comprises a seventh matching circuit and an eighth matching circuit, the first end is electrically connected to the first matching circuit through the seventh matching circuit, and the second end is electrically connected to the first matching circuit through the eighth matching circuit.

6. The electronic device according to claim 1, wherein
the electronic device comprises a fifth matching circuit and a sixth matching circuit; and
the first end is electrically connected to the first matching circuit through the fifth matching circuit, the second end is electrically connected to the first matching circuit through the sixth matching circuit, and both the third end and the fourth end are electrically connected to the NFC chip through the first matching circuit.

7. The electronic device according to any one of claims 1 to 6, wherein
the electronic device is a foldable device, the foldable device comprises a first part and a second part, and the first part is capable of rotating relative to the second part, so that the first part and the second part are closed, or the first part is unfolded relative to the second part; and
the first antenna is located in the first part, and the second antenna is located in the second part.

8. The electronic device according to any one of claims 1 to 7, wherein
the first antenna and the second antenna are respectively located at two opposite ends of the electronic device, or are located at a same end of the electronic device.

9. The electronic device according to any one of claims 1 to 8, wherein
the electronic device further comprises a third antenna and a conductive structure; and
the third antenna is used as the second antenna, and/or the conductive structure is used as the second antenna.

10. The electronic device according to any one of claims 1 to 9, wherein
the first antenna comprises a coupling coil.

11. An electronic device, comprising:
an NFC chip, a first matching circuit, a balun, a ninth matching circuit, a tenth matching circuit, a first antenna, and a second antenna, wherein
the NFC chip is electrically connected to the first matching circuit;
the ninth matching circuit is electrically connected to the first matching circuit through the balun;
the first antenna comprises a first end and a second end, the first end is electrically connected to the balun through the ninth matching circuit, and the second end is grounded; and
the second antenna comprises a third end and a fourth end, the third end is electrically connected to the ninth matching circuit through the tenth matching network, and the fourth end is grounded.

12. The electronic device according to claim 11, wherein
the electronic device comprises an eleventh matching circuit, and the first end is electrically connected to the ninth matching circuit through the eleventh matching circuit.

13. The electronic device according to claim 11 or 12, wherein
the electronic device comprises a foldable device, the foldable device comprises a first part and a second part, and the first part is capable of rotating relative to the second part, so that the first part and the second part are closed, or the first part is unfolded relative to the second part; and
the first antenna is located in the first part, and the second antenna is located in the second part.

14. The electronic device according to any one of claims 11 to 13, wherein
the first antenna and the second antenna are respectively located at two opposite ends of the electronic device, or are located at a same end of the electronic device.

15. The electronic device according to any one of claims 11 to 14, wherein
the electronic device comprises a third antenna and a conductive structure; and
the third antenna is used as the second antenna, and/or the conductive structure is used as the second antenna.
